# FASCICULE DE BREVET EUROPEEN

(11) **EP 0 657 196 B1**
(45) Date de publication et mention de la délivrance du brevet: **21.01.1998**
(21) Numéro de dépôt: 94402640.0
(22) Date de dépôt: 18.11.1994
(51) Int. Cl.: B01D 21/00, B01D 21/24

(54) **Perfectionnements apportés aux décanteurs**
Verbesserungen bei oder in bezug auf Nachklärbecken
Improvements in or relating to clarifiers

(30) Priorité: 09.12.1993 FR 9314815
(43) Date de publication de la demande: 14.06.1995
(73) Titulaire: DEGREMONT, 92508 Rueil-Malmaison Cédex (FR)
(72) Inventeur: Smati, Abdellatif, F-92150 Suresnes (FR)
(74) Mandataire: Armengaud Ainé, Alain

(56) Documents cités:
- FR-A- 576 908
- FR-A- 996 122
- GB-A- 2 081 123

## Description

La présente invention est relative à des perfectionnements apportés aux décanteurs qui sont utilisés notamment dans des installations de traitements de liquides en particulier d'eaux.

FR-A-996 122 et 576 908 font connaître des bassins de décantation alimentés en liquide à partir d'un canal d'alimentation et d'un déversoir qui comporte une pluralité d'ouvertures calibrées afin d'assurer la répartition du liquide.

On sait en outre que les performances des décanteurs dépendent dans une large mesure de leur hydraulique interne : nature de l'écoulement, courts-circuits, recirculations, temps de séjour. Certains spécialistes en la matière évaluent à plus de 50% la chute de rendement due à une mauvaise hydraulique interne du décanteur.

On sait par ailleurs que cette hydraulique interne dépend elle-même d'une pluralité de facteurs et notamment des facteurs suivants :
- La géométrie de répartition du liquide à l'entrée du décanteur;
- Le dispositif de récupération du liquide traité;
- Le dispositif de récupération des matières décantées et leur recyclage;
- La disposition relative des trois dispositifs spécifiés ci-dessus.

Parmi les différents facteurs énumérés ci-dessus, le dispositif de répartition, en raison de sa position à l'origine de la chaîne, est celui qui affecte le plus le comportement hydraulique du décanteur.

Il est connu que pour donner de bons résultats, un dispositif de répartition du liquide à l'entrée d'un décanteur doit assurer les fonctions suivantes :
1) Une distribution régulière du flux entrant dans les deux directions verticale et horizontale de la section courante du décanteur ;
2) Une dissipation optimale de l'énergie d'entrée ;
3) Une réduction de l'impact des courants secondaires : courants de densité, courants thermiques ;
4) Une réduction de l'impact des variations de débit ;
5) Concourir à la floculation des matières en suspension et;
6) Minimiser les perturbations des matières décantées se déposant au fond du décanteur ("lit de boue").

On sait que les jets de fluide entrant dans un fluide de même nature relativement "au repos" présentent la propriété de transférer à ce dernier une partie de leur quantité de mouvement. Cette propriété se traduit par un entraînement d'une certaine masse du fluide ambiant. Le jet est alors progressivement ralenti et dispersé en même temps que son champ d'action s'élargit, favorisé par l'étendue latérale du domaine fluide.

Dans la pratique, tous les dispositifs d'alimentation des réacteurs et notamment des décanteurs se traduisent par la formation de jets. Or, les dispositifs d'alimentation sont toujours très petits vis à vis des dimensions des réacteurs et la dimension non infinie des réacteurs empêche les jets d'alimentation de se développer à la manière des jets libres en raison de l'existence notamment des effets de bords dûs aux parois, de la surface libre, etc... Il en résulte que les jets sont défléchis au gré des géométries des réacteurs et ils deviennent ainsi la cause directe d'une mauvaise hydraulique interne.

On sait en effet que l'existence d'une paroi a pour effet de limiter le champ latéral du jet. Le fluide qui est entraîné à l'amont ne peut être remplacé que par des courants de retour (contre-courants) provenant de l'aval et provoquant la déflection du jet.

La présente titulaire s'est livré à différentes simulations numériques permettant de mettre en évidence un tel phénomène qui a d'ailleurs été déjà observé sur certaines installations industrielles réalisées antérieurement.

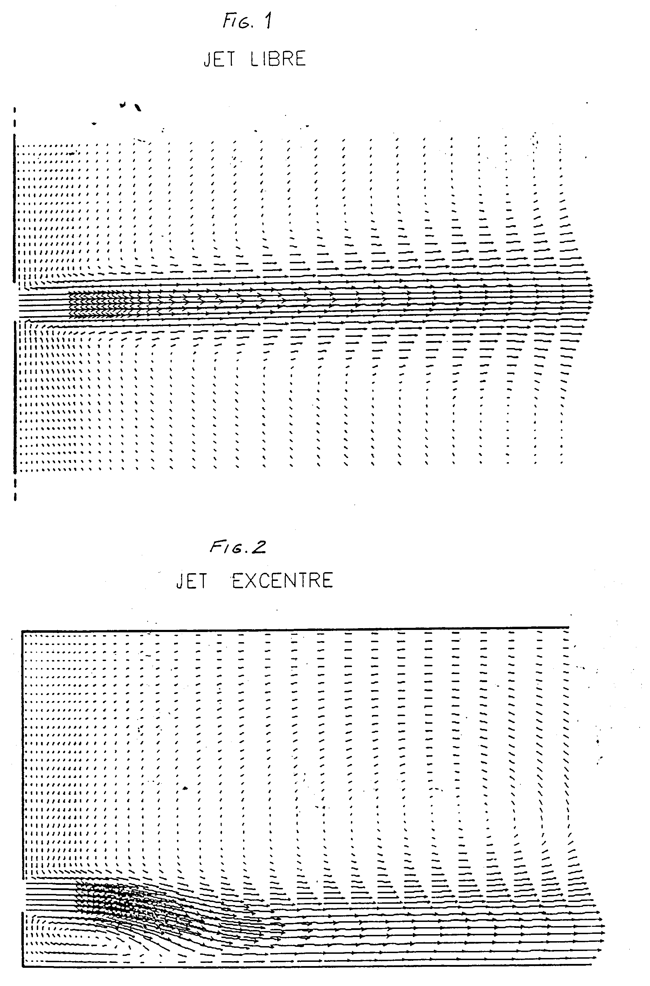

Sur les figures 1 à 6 des dessins annexés on a représenté diverses configurations d'écoulements obtenues lors des simulations faites par la titulaire, d'un certain nombre de dispositifs connus.

La figure 1 se réfère à un système d'alimentation par jet libre. Ce cas n'existe pas dans la pratique mais son étude permet d'illustrer les propriétés fondamentales des jets (notamment entraînement du fluide ambiant, ralentissement et expansion du jet...).

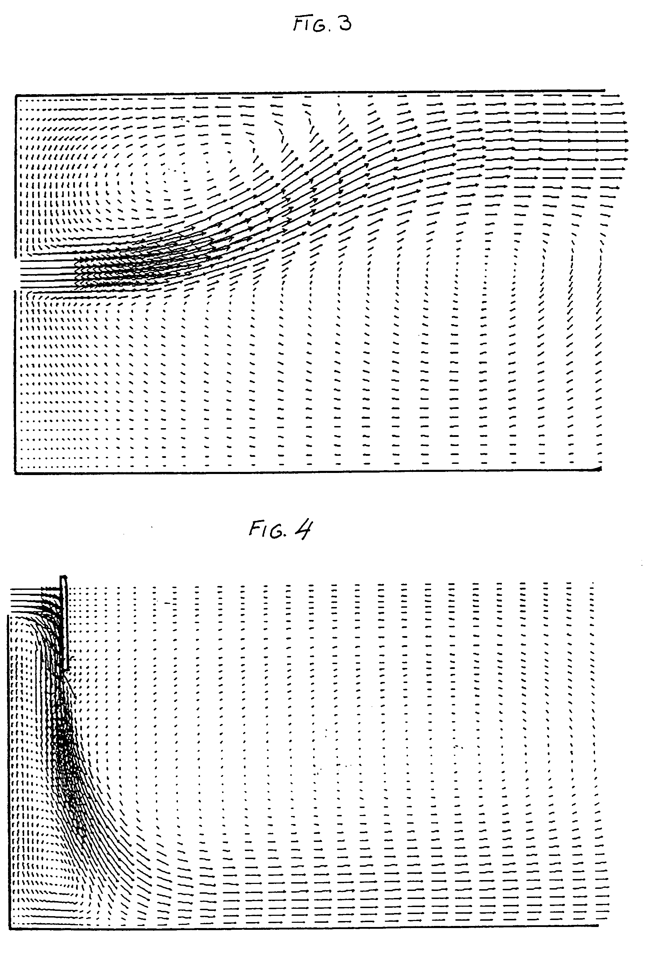

Les figures 2 et 3 se réfèrent à un système d'alimentation comportant une entrée par un jet plus ou moins centré entre deux parois. La figure 2 montre la configuration de l'écoulement obtenu à l'aide d'un jet excentré. On voit que sa déflection est nette. Un jet parfaitement centré n'étant pas réalisable dans la pratique, on a simulé des jets présentant une très faible excentricité (de l'ordre de quelques %). Le résultat illustré par la figure 3 est tout au moins surprenant : il suffit d'une très faible excentricité pour que le jet soit totalement défléchi (système de bascule, grande instabilité).

La figure 4 se réfère à un système d'alimentation par un jet (déversoir) muni d'une siphoïde. L'utilisation d'une telle siphoïde est largement répandue car, outre son action évidente de déflection du jet d'entrée, on lui attribue des avantages supposés comme notamment la dissipation de l'énergie d'entrée ou l'amélioration de la distribution des vitesses. La présente titulaire a fait une étude particulièrement poussée d'un tel dispositif. La conclusion est que dans tous les cas, les résultats obtenus sont similaires à ceux des jets plus ou moins excentrés.

Dans tous les cas, le résultat est le même : seule une faible fraction de la section présentée à l'écoulement du fluide est utilisée. Le fluide entrant s'y concentre sous la forme d'un jet défléchi. Le reste de la section est occupé par un courant de retour induit.

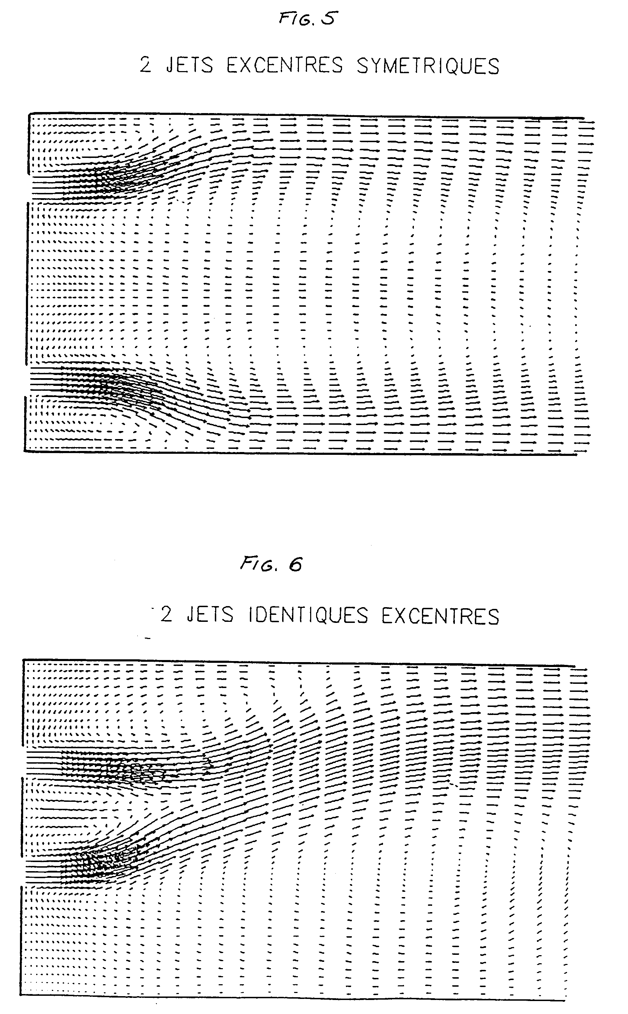

Afin de remédier à ce phénomène, la titulaire a alors imaginé de réaliser un dispositif présentant deux jets excentrés de manière que les effets négatifs s'annulent. Cette réalisation se traduit par des configurations d'écoulement qui sont illustrées par les figures 5 et 6.

Sur la figure 5, le dispositif d'alimentation comportait deux jets excentrés symétriques et sur le dispositif illustré par la figure 6, ce dispositif comportait deux jets identiques excentrés.

On voit que cette configuration apporte une nette amélioration dans la mesure où une plus grande fraction de la section présentée à l'écoulement est utilisée. Cependant, le résultat demeure très dépendant des positions relatives des jets dans la section d'entrée et surtout de leurs équilibrages (débits et vitesses des deux jets). Le jet le plus fort absorbe (ou inhibe) complètement le jet le plus faible, ce qui ramène au cas d'un seul jet excentré.

C'est en recherchant une solution techniquement réalisable pour l'équilibrage des deux jets que la titulaire a découvert un fait nouveau et totalement inattendu.

En conséquence, l'invention concerne un décanteur notamment pour installations de traitements de liquides constitué d'un bassin de décantation alimenté en liquide à partir d'un canal d'alimentation et d'un déversoir, l'alimentation du liquide étant effectuée par l'intermédiaire du déversoir, positionné entre le canal d'alimentation et des chambres d'admission du liquide, ce dernier étant admis dans le bassin de décantation par l'intermédiaire d'une pluralité d'ouvertures calibrées qui sont pratiquées respectivement dans les cloisons des chambres d'admission du liquide et alimentées en liquide à partir dudit déversoir de manière que chaque ouverture reçoive une fraction déterminée du débit du liquide, lesdites ouvertures étant disposées selon au moins deux rangées horizontales de niveaux différents, les ouvertures de chaque rangée étant décalées par rapport aux ouvertures de la rangée adjacente, la rangée inférieure d'ouvertures étant disposée à une hauteur comprise entre 1/3 H et 2/3 H, H étant la hauteur du liquide dans le bassin de décantation et la rangée supérieure d'ouvertures étant disposée à une hauteur supérieure à 2/3 H et suffisamment en dessous de la surface libre du liquide contenu dans le bassin de décantation.

Selon une caractéristique du dispositif objet de l'invention, la rangée d'ouvertures horizontales la plus basse est positionnée, par rapport au radier du bassin de décantation, à un niveau choisi de manière à éviter le développement d'un courant de fond susceptible de perturber le lit des matières décantées se déposant sur le radier.

Selon une autre caractéristique de l'invention, la rangée d'ouvertures horizontales la plus haute est positionnée, par rapport à la surface libre du liquide dans le bassin de décantation, à un niveau choisi de manière à éviter tout courant de surface susceptible de se propager très loin sans se mélanger avec le reste du fluide.

Selon la présente invention, le dispositif peut comporter en outre une marche d'escalier située au-dessus du radier, dont la hauteur est calibrée de manière à éviter toute perturbation du lit de matières décantées se déposant sur le radier.

D'autres caractéristiques et avantages de la présente invention ressortiront de la description faite ci-après en référence aux dessins annexés qui en illustrent un exemple de réalisation dépourvu de tout caractère limitatif. Sur les dessins :

Les figures 1 à 6 illustrent les configurations d'écoulements auquel on s'est référé dans le préambule de la présente description ;

La figure 7 est une vue schématique en perspective, avec arrachement partiel, d'un décanteur rectangulaire perfectionné selon la présente invention ;

Les figures 8 à 15 représentent les configurations d'écoulements obtenues grâce au dispositif objet de la présente invention et ;

La figure 16 est une vue schématique en coupe par un plan vertical du bassin de décantation. Sur cette coupe, on a figuré les différents plans des figures 8 à 15.

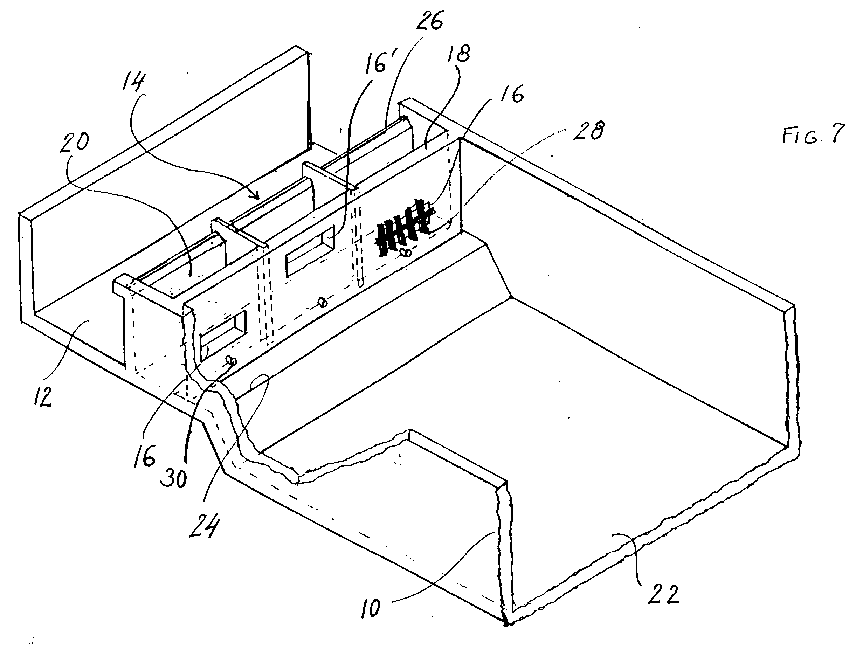

En se référant à la figure 7, on voit que le décanteur rectangulaire représenté sur cette figure est alimenté en liquide par l'intermédiaire d'un canal d'alimentation 12. Ce canal d'alimentation alimente une pluralité de chambres d'admission et de dissipation d'énergie telles que 20, par l'intermédiaire d'un système de déversoir désigné dans son ensemble par la référence 14.

Du côté du bassin de décantation 10, les chambres d'alimentation telles que 20 sont pourvues d'une paroi 18.

Selon la présente invention, le système de répartition du liquide est constitué d'une pluralité d'ouvertures calibrées, pratiquées dans la paroi 18 et disposées en quinconce. Chacune de ces ouvertures reçoit une fraction bien déterminée du débit par l'intermédiaire d'une chambre d'admission et de dissipation d'énergie, telle que 20. Ainsi qu'on le voit sur la figure 7, ce système de répartition comprend :
- une rangée d'ouvertures supérieures telles que 16' et,
- une rangée d'ouvertures inférieures telles que 16, disposées en quinconce par rapport aux ouvertures 16' de la rangée supérieure.

Chacune des chambres d'admission et de dissipation d'énergie telles que 20 est de préférence alimentée en liquide par le canal 12, par l'intermédiaire d'une lame déversante réglable telle que 26. Chaque ouverture 16-16' peut être munie de moyens tels que 28 permettant de répartir le liquide en homogénéisant et en dirigeant les vitesses du jet à sa sortie de l'ouverture correspondante, ce système étant éventuellement réglable sur site.

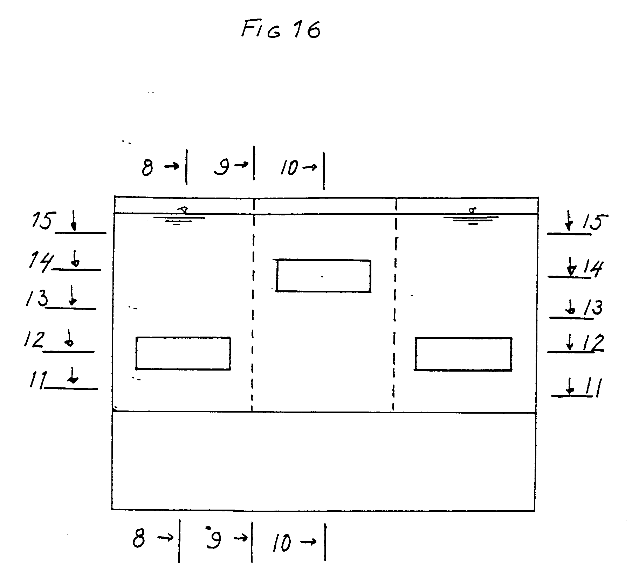

Selon la présente invention, la rangée la plus basse est positionnée par rapport au radier 22 de manière à éviter le développement d'un courant de fond susceptible de perturber le lit des matières décantées se déposant sur le radier ("lit de boue"). De préférence, cette rangée inférieure d'ouvertures 16 est disposée à une hauteur comprise entre 1/3H et 2/3H, H étant la hauteur du liquide dans l'ouvrage (voir le schéma de la figure 16).

Selon une autre caractéristique de l'invention, la rangée supérieure d'ouvertures 16' est positionnée de manière à éviter tout courant de surface risquant de se prolonger très loin, sans possibilité de mélange avec le reste du fluide contenu dans le bassin 10. De préférence, cette rangée supérieure des ouvertures 16' est disposée à une hauteur supérieure à 2/3 H et suffisamment en dessous de la surface libre du liquide contenu dans le bassin de décantation.

Selon la présente invention, le dispositif de répartition décrit ci-dessus peut être complété par une marche d'escalier 24 dont la hauteur est calibrée de manière à éviter toute perturbation du lit de matières décantées se déposant sur le radier 22.

De manière connue, chacune des chambres d'admission et de dissipation d'énergie telle que 20 est pourvue d'un orifice de vidange 30.

Ainsi qu'on le comprend, le principe à la base du dispositif de répartition selon l'invention décrit ci-dessus, consiste à découper chacun des deux jets excentrés (du type du système d'alimentation illustré par les figures 5 et 6) en plusieurs jets discontinus qui sont facilement contrôlables grâce à la présence des déversoirs tels que 26 alignés en amont du système de répartition.

Cette configuration fait apparaître des courants de recirculation en trois dimensions et une modification radicale de la structure de l'écoulement. A l'inverse de toutes les configurations déjà explorées, et auxquelles se réfèrent les figures 1 à 6 explicitées ci-dessus, les jets, sans subir de déflection notable, se dispersent pratiquement uniformément dans toutes les directions en occupant la quasi-totalité de la section présentée à l'écoulement. Les zones tourbillonnaires sont limitées à une faible distance de l'entrée en créant ainsi une zone de mélange favorable à la floculation des matières en suspension.

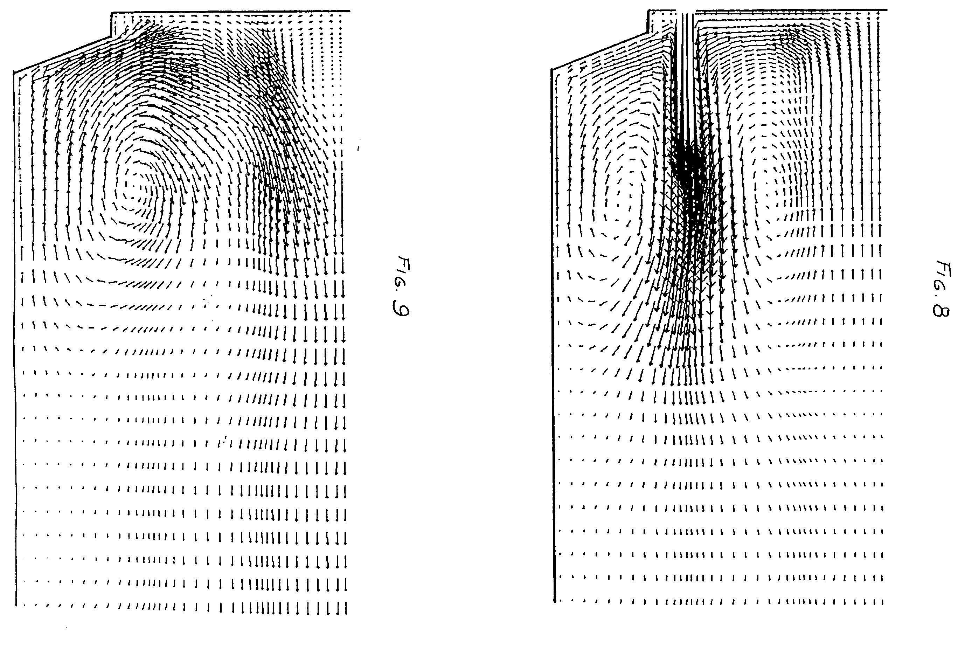

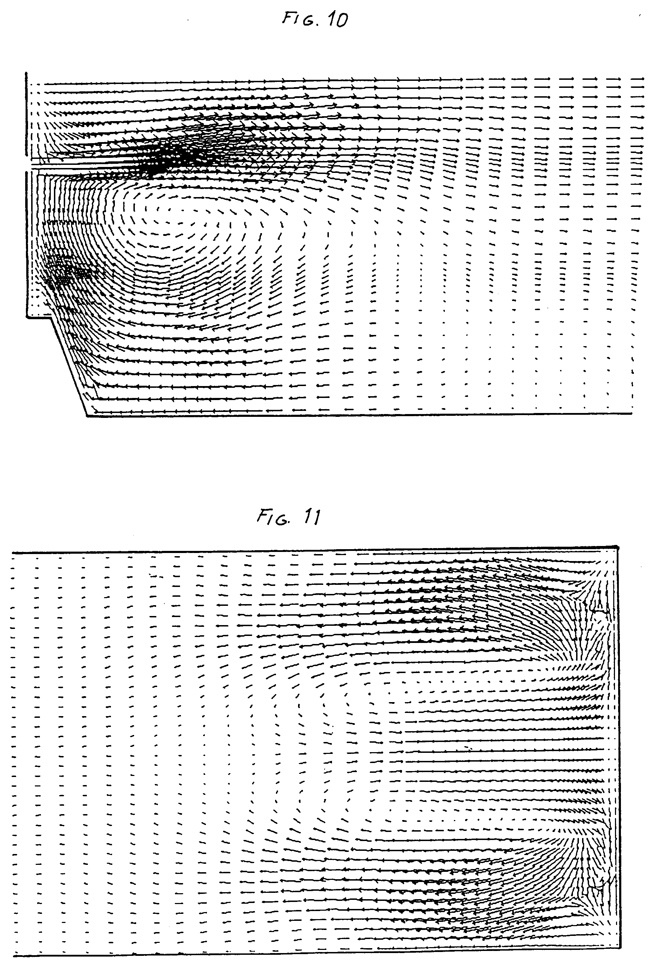

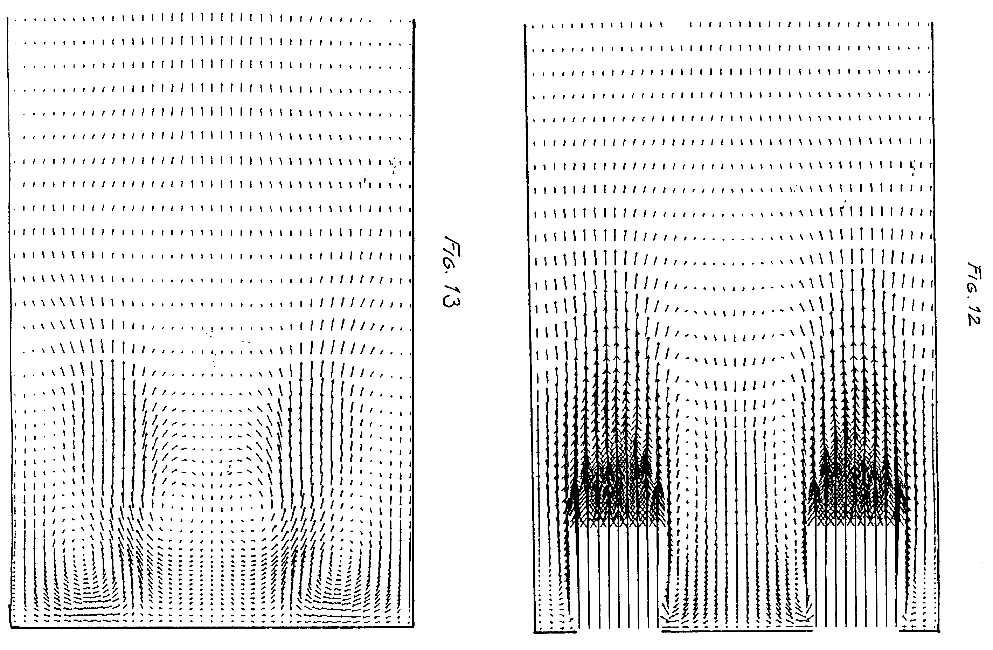

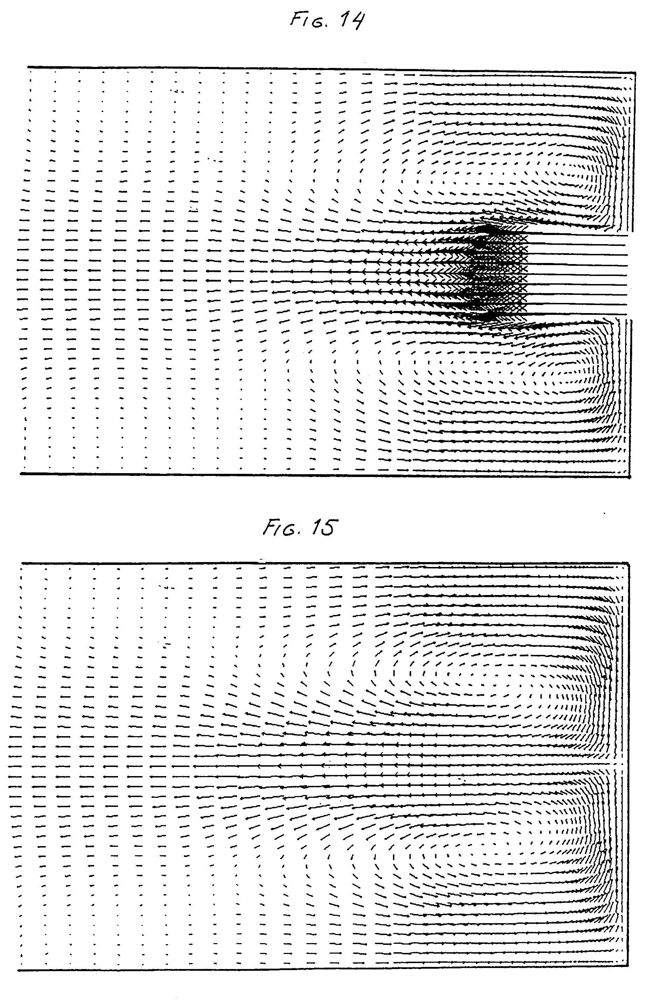

Les figures 8 à 15 illustrent les configurations d'écoulement obtenues grâce au système de répartition représenté sur la figure 7.

Les plans de ces figures ont été précisés sur la figure 16. L'examen des figures 8 à 15 confirment les résultats apportés par l'invention et précisés ci-dessus.

Parmi les avantages apportés par le dispositif objet de la présente invention, on citera notamment les suivants :
- une régularisation très rapide des vitesses du jet dans toute la section de l'ouvrage ;
- une réduction des vitesses en fond d'ouvrage se traduisant par le fait que les matières décantées (lit de boue) ne sont pas perturbées ;
- une dissipation naturelle de l'énergie d'entrée grâce à l'interaction entre les jets ;
- une création d'une zone de mélange limitée à l'entrée de l'ouvrage ;
- une minimisation des courants secondaires obtenue par le mélange immédiat du fluide entrant avec le fluide ambiant ;
- une répartition insensible aux variations de débit obtenue grâce à la présence des déversoirs tels que 26 qui permet à chaque ouverture 16, 16' du dispositif de répartition de recevoir une fraction déterminée du débit.

Tous ces avantages ressortent clairement de l'examen des figures 8 à 15. Ils permettent d'améliorer la décantation en augmentant le rendement global du décanteur.

Par ailleurs, l'absence d'obstacles (siphoïdes) à l'intérieur de l'ouvrage simplifie la reprise des flottants et le râclage du fond, ce qui diminue le coût global de l'installation. Ce coût est encore réduit grâce à la simplicité de la réalisation du dispositif selon l'invention et en raison du fait qu'il ne nécessite pratiquement aucun entretien.

Il demeure bien entendu que la présente invention, n'est pas limitée à l'exemple de réalisation décrit et représenté. Ainsi, dans l'exemple de réalisation décrit et représenté ici le bassin de décantation présente une forme rectangulaire, mais cependant, ce bassin peut présenter toute autre forme ou configuration géométrique, notamment carrée, circulaire ou autre.

## Revendications

1. Décanteur notamment pour installations de traitements de liquides constitué d'un bassin de décantation (10) alimenté en liquide à partir d'un canal d'alimentation (12) et d'un déversoir (14), l'alimentation du liquide étant effectuée par l'intermédiaire du déversoir (14), positionné entre le canal d'alimentation (12) et des chambres d'admission (20) du liquide, ce dernier étant admis dans le bassin de décantation (10) par l'intermédiaire d'une pluralité d'ouvertures calibrées (16, 16') qui sont pratiquées respectivement dans les cloisons (18) des chambres d'admission (20) du liquide et alimentées en liquide à partir dudit déversoir (14) de manière que chaque ouverture reçoive une fraction déterminée du débit du liquide, lesdites ouvertures (16, 16') étant disposées selon au moins deux rangées horizontales de niveaux différents, les ouvertures de chaque rangée étant décalées par rapport aux ouvertures de la rangée adjacente, la rangée inférieure d'ouvertures (16) étant disposée à une hauteur comprise entre 1/3 H et 2/3 H, H étant la hauteur du liquide dans le bassin de décantation (10) et la rangée supérieure d'ouvertures (16') étant disposée à une hauteur supérieure à 2/3 H et suffisamment en dessous de la surface libre du liquide contenu dans le bassin de décantation.

2. Décanteur selon la revendication 1 caractérisé en ce que la rangée d'ouvertures (16) horizontales la plus basse est positionnée, par rapport au radier (22) du bassin de décantation (10), à un niveau choisi de manière à éviter le développement d'un courant de fond susceptible de perturber le lit des matières décantées se déposant sur le radier.

3. Décanteur selon la revendication 1 caractérisé en ce que la rangée d'ouvertures horizontales la plus haute (16') est positionnée par rapport à la surface du liquide dans le bassin de décantation, à un niveau choisi de manière à éviter tout courant de surface susceptible de se propager très loin sans se mélanger avec le reste du fluide.

4. Décanteur selon l'une quelconque des revendications précédentes caractérisé en ce que le système de répartition du liquide comporte en outre une marche d'escalier (24), au-dessus du radier (10), dont la hauteur est calibrée de manière à éviter toute perturbation du lit de matières décantées se déposant sur le radier.

5. Décanteur selon l'une quelconque des revendications précédentes caractérisé en ce que chacune desdites ouvertures (16, 16') est munie de moyens de réglage et de distribution de la vitesse du jet (28).

6. Décanteur selon l'une quelconque des revendications précédentes caractérisé en ce que chacune des chambres d'admission et de dissipation d'énergie (20) est alimentée en liquide par le canal d'alimentation (12), par l'intermédiaire d'une lame déversante réglable (26).

## Claims

1. Clarifier, notably for treatment installations for liquids constituted of a settling tank (10) supplied with liquid from a feed channel (12) and of an overflow (14), the feed of the liquid being performed by means of the overflow (14), positioned between the feed channel (12) and inlet chambers (20) for the liquid, the liquid being fed into the settling tank (10) by means of a plurality of calibrated openings (16, 16') which are formed, respectively, in the partitions (18) of the inlet chambers (20) for the liquid and supplied with liquid from said overflow (14) in such a way that each opening receives a determined fraction of the flow rate of the liquid, said openings (16, 16') being disposed along at least two horizontal rows of different levels, the openings of each row being offset with respect to the openings of the adjacent row, the lower row of openings (16) being disposed at a height lying between 1/3 H and 2/3 H, where H is the height of the liquid in the settling tank (10) and the upper row of openings (16') being disposed at a height greater than 2/3 H and sufficiently below the free surface of the liquid contained in the settling tank.

2. Clarifier according to claim 1, characterized in that the lowest row of horizontal openings (16) is positioned, with respect to the floor (22) of the settling tank (10), at a level chosen in such a way as to prevent the development of a bottom current capable of perturbing the bed of settled material deposited on the floor.

3. Clarifier according to claim 1, characterized in that the highest row of horizontal openings (16') is positioned, with respect to the surface of the liquid in the settling tank, at a level chosen in such a way as to prevent any surface current likely to propagate very far without mixing with the remainder of the fluid.

4. Clarifier according to any one of the preceding claims, characterized in that the distribution system for the liquid comprises, in addition, a step (24) above the floor (10), the height of which is calibrated so as to prevent any perturbation of the bed of settled materials deposited on the floor.

5. Clarifier according to any one of the preceding claims, characterized in that each of said openings (16, 16') is provided with means for regulating and distributing the velocity of the jet (28).

6. Clarifier according to any one of the preceding claims, characterized in that each of the inlet and energy dissipation chambers (20) is supplied with liquid by the feed channel (12) by means of an adjustable sloping strip (26).

## Patentansprüche

1. Dekantierer, insbesondere für Anlagen zur Behandlung von Flüssigkeiten, der ein Dekantierbecken aufweist, das aus einem Zuleitungskanal (12) und einem Überlauf (14) mit Flüssigkeit versorgt wird,
dadurch **gekennzeichnet,**
daß die Flüssigkeitszufuhr über einen zwischen dem Zuleitungskanal (12) und den Eintrittskammern der Flüssigkeit (20) angeordneten Überlauf (14) stattfindet, wobei diese Eintrittskammern (20) mit dem Dekantierbecken (10) über eine Vielzahl von kalibrierten Öffnungen (16,16') in Verbindung stehen, die jeweils in den Wänden (18) der über diesen Überlauf (14) mit Flüssigkeit versorgten Eintrittskammern (20) für die Flüssigkeit so ausgebildet sind, daß jeder Öffnung ein bestimmter Anteil des Flüssigkeitsdurchsatzes zukommt, wobei die Öffnungen (16,16') in mindestens zwei horizontalen Reihen unterschiedlicher Höhe und die Öffnungen jeder Reihe zu den Öffnungen der benachbarten Reihe so versetzt angeordnet sind, daß die untere Reihe von Öffnungen (16) in einer Höhe zwischen 1/3 H und 2/3 H und die obere Reihe von Öffnungen (16') in einer Höhe größer als 2/3 H und ausreichend unterhalb der freien Oberfläche der in dem Dekantierbecken (10) enthaltenen Flüssigkeit angeordnet ist, wobei H die Flüssigkeitshöhe im Dekantierbecken (10) ist.

2. Dekantierer gemäß Anspruch 1,
dadurch **gekennzeichnet**,
daß die niedrigste horizontale Reihe von Öffnungen (16) im Verhältnis zur Sohle (22) des Dekantierbeckens (10) auf einer solchen Höhe angeordnet ist, daß die Entwicklung einer Grundströmung verhindert wird.

3. Dekantierer gemäß Anspruch 1,
dadurch **gekennzeichnet**,
daß die höchste Reihe von horizontalen Öffnungen (16') im Verhältnis zur Flüssigkeitsoberfläche im Dekantierbecken (10) auf einer solchen Höhe angeordnet ist, daß jede Oberflächenströmung vermieden wird, die sich sehr weit ausbreiten könnte, ohne sich mit dem Rest der Flüssigkeit zu vermischen.

4. Dekantierer gemäß einem der vorhergehenden Ansprüche,
dadurch **gekennzeichnet**,
daß das System zur Verteilung der Flüssigkeit über der Sohle (22) eine Treppenstufe (24) aufweist, deren Höhe derart kalibriert ist, daß jede Verwirbelung des Betts aus sich auf der Sohle absetzendem dekantiertem Material vermieden wird.

5. Dekantierer gemäß einem der vorhergehenden Ansprüche,
dadurch **gekennzeichnet**,
daß jede der Öffnungen (16,16') mit Mitteln zur Regelung und Verteilung der Geschwindigkeit des Jetstrahls (28) versehen ist.

6. Dekantierer gemäß einem der vorhergehenden Ansprüche,
dadurch **gekennzeichnet**,
daß jede der Kammern zum Eintritt und zur Verteilung der Energie (20) über ein regulierbares Überfallwasserschild (26) von dem Zuleitungskanal (12) mit Flüssigkeit versorgt wird.
